# FASCICULE DE BREVET EUROPEEN

(11) **EP 3 445 658 B1**
(45) Date de publication et mention de la délivrance du brevet: **04.09.2019**
(21) Numéro de dépôt: 17732522.2
(22) Date de dépôt: 09.06.2017
(51) Int. Cl.: B64G 1/50

(54) **ENGIN SPATIAL**
RAUMFAHRZEUG
SPACE VEHICLE

(30) Priorité: 10.06.2016 FR 1655371
(43) Date de publication de la demande: 27.02.2019
(73) Titulaire: Airbus Defence and Space SAS, 31402 Toulouse Cedex 4 (FR)
(72) Inventeur: MENA, Fabrice, 81500 TEULAT (FR); DUNAT, Jean-Christophe, 31402 TOULOUSE (FR)
(74) Mandataire: Cabinet Plasseraud
(86) Numéro de dépôt international: PCT/FR2017/051454
(87) Numéro de publication internationale: WO 2017/212180

(56) Documents cités:
- EP-A2- 1 006 769
- WO-A1-2016/097577
- JP-A- H03 597
- US-A- 5 332 030
- US-B1- 6 776 220

## Description

La présente invention concerne un engin spatial et en particulier un satellite géostationnaire.

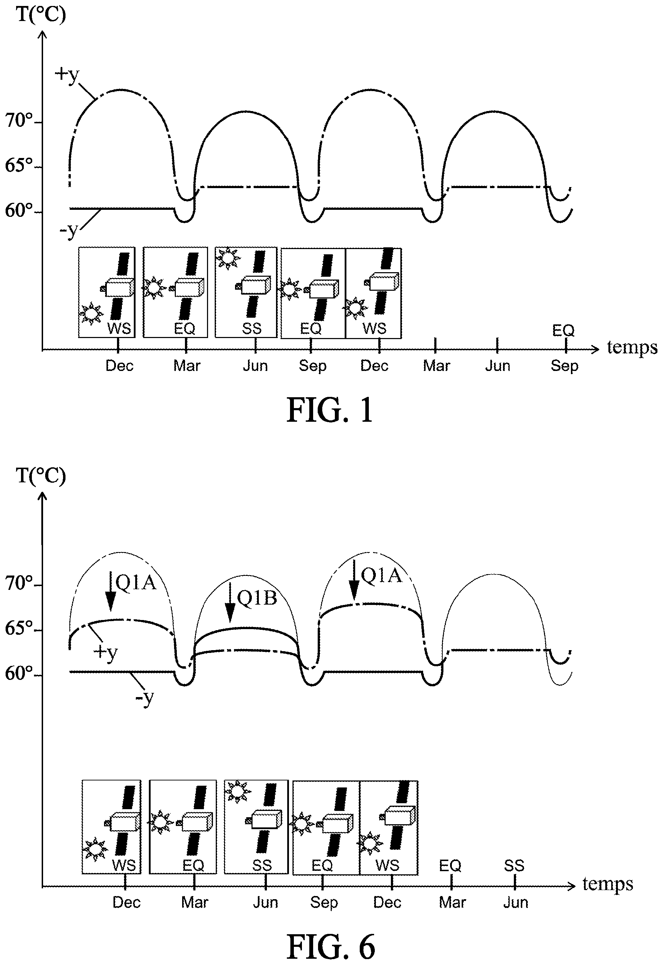

En raison du mouvement de révolution de la terre autour du soleil, les différentes faces d'un satellite géostationnaire ne reçoivent pas la même quantité de rayonnement solaire au cours des saisons. Il en résulte des différences significatives de températures entre les faces +Y et -Y du satellite ainsi que des variations cycliques de ces températures au cours des saisons. Ainsi, comme visible sur la figure 1, au cours du solstice d'hiver (WS), la face +Y, exposée aux rayonnements solaires, présente des températures plus élevées que la face -Y située à l'ombre. Au cours du solstice d'été (SS), c'est la face -Y qui présente des températures élevées car c'est elle qui est exposée aux rayonnements solaires tandis que la face +Y est à l'ombre. Durant les équinoxes d'hiver et d'été (EQ), les faces -Y et + Y présentent des températures moins élevées que durant les solstices d'hiver (WS) et d'été (SS).

Ces écarts de température entre la face +Y et la face -Y ainsi que les fluctuations de température au cours des saisons, sont contraignantes pour le satellite et pour sa charge utile.

Pour diminuer ces écarts de température, divers systèmes palliatifs ont déjà été mis en place. Toutefois, ces systèmes palliatifs ne sont pas totalement satisfaisants.

La demande de brevet WO 2016/097577 décrit un engin spatial équipé d'un radiateur auxiliaire. Cette demande de brevet est un document opposable uniquement au titre de l'article 54(3) CBE.

La demande de brevet US 6,776,220 divulgue par exemple des caloducs agencés entre le radiateur fixé sur la face +Y et le radiateur fixé sur la face -Y. Ces caloducs permettent de transférer une fraction de la chaleur en excédant d'un radiateur situé du côté du soleil vers un radiateur situé à l'ombre. Toutefois, malgré la présence de ces caloducs, les écarts de température entre la face +Y et la face -Y restent importants surtout au cours des solstices d'été et d'hiver au cours desquels ils peuvent encore atteindre environ 10°C à 15°C, puisque le radiateur situé à l'ombre est déjà hautement sollicité par les dissipations des équipements électroniques qu'il refroidit. Le radiateur situé à l'ombre ne peut donc recevoir qu'une faible quantité de chaleur excédentaire du radiateur situé au soleil.

Contrairement à la demande de brevet US 6,776,220, la présente invention fait appel à un radiateur auxiliaire qui n'est pas en échange thermique direct avec des équipements électroniques. Ce radiateur auxiliaire est de plus situé à l'ombre lorsque le radiateur du mur opposé est situé du côté du soleil. Le radiateur auxiliaire selon la présente invention peut ainsi recevoir une grande quantité de chaleur du radiateur situé au soleil de façon à abaisser les écarts de température entre les murs +Y et -Y.

Enfin, cet équilibre de chaleur est obtenu avec l'installation d'un système de transport d'énergie thermique tel que la LHP ou la MPL qui, contrairement à la demande de brevet US 6,776,220, ne nécessite que l'installation de deux tuyaux entre les deux radiateurs, au lieu d'un certain nombre relativement élevé de caloducs dont la masse totale est importante.

Des chaufferettes électriques ont également été utilisées pour réchauffer les faces du satellite situées du côté ombre. Néanmoins, les chaufferettes présentent une efficacité limitée et requiert de sur-dimensionner le système de puissance électrique du satellite. Ce surdimensionnement augmente considérablement le coût du système de puissance électrique. De plus, le réchauffage des parties froides du satellite occasionne également une augmentation de la température des parties chaudes de celui-ci. Or, ces parties chaudes sont déjà proches de leur température de limite de fonctionnement.

Par ailleurs, ces écarts de températures entre les faces du satellite doivent être reproduits lors des tests de qualification du satellite. La mise en oeuvre de ces écarts thermiques et leur fluctuation trimestrielle dans une atmosphère sous vide est complexe.

Le but de la présente invention est de limiter les écarts de température entre les faces +Y et -Y et de réduire, pour une même face, les variations de température au cours des saisons.

A cet effet, l'invention a pour objet un engin spatial comprenant :
- un boitier délimitant un espace intérieur et un espace extérieur, le boitier ayant une face Nord, une face Sud opposée à la face Nord, une face Est et une face Ouest opposée à la face Est, une face Terre et une face anti-Terre opposée à la face anti-Terre,
- un premier radiateur porté par une face parmi la face Nord et la face Sud, et
- un second radiateur porté par l'autre face parmi la face Nord et la face Sud,
le premier radiateur et le second radiateur comportant chacun une face principale interne, une face principale externe opposée à la face principale interne, des faces latérales longitudinales et des faces latérales transversales,
caractérisé en ce que l'engin spatial comporte en outre un premier radiateur auxiliaire et un premier dispositif de transfert thermique auxiliaire reliant thermiquement ledit premier radiateur auxiliaire à la face principale interne du second radiateur, le premier radiateur auxiliaire étant agencé dans une première portion de l'espace extérieur, ladite première portion étant délimitée par la face principale externe du premier radiateur et par des premiers plans contenant les faces latérales du premier radiateur,
et en ce que ledit premier dispositif de transfert thermique auxiliaire comporte un dispositif conducteur de chaleur, ledit premier radiateur auxiliaire étant constitué uniquement d'un ou de deux panneaux rayonnants supportant ledit dispositif conducteur de chaleur, dit(s) panneau(x) rayonnant(s) porteur(s).

Avantageusement, ledit premier radiateur auxiliaire est moins encombrant, et moins lourd à accommoder sur la structure du satellite, plus facile à installer et à adapter à différentes configurations de satellites.

Avantageusement, l'ensemble premier dispositif de transfert thermique et premier radiateur auxiliaire permettent de refroidir le second radiateur lorsque celui-ci est exposé aux rayonnements solaires, c'est-à-dire lors des solstices d'hiver et solstice d'été. Le refroidissement du second radiateur permet un refroidissement plus efficace des équipements électroniques.

Avantageusement, la diminution des variations de température des faces de l'engin spatial devrait permettre de réduire la durée des tests de qualification en vide thermique. Il en résulterait un gain significatif en termes de coût et de durée de conception d'un engin spatial.

Avantageusement, l'ensemble premier dispositif de transfert thermique auxiliaire et premier radiateur auxiliaire peuvent être facilement montés et démontés sur un engin spatial au cours de la conception ou être ajouté à un engin spatial déjà existant. L'ajout de cet ensemble ne nécessite pas de modifier l'architecture de l'engin spatial déjà existant.

Avantageusement, l'ensemble premier dispositif de transfert thermique et premier radiateur auxiliaire présente un encombrement faible. Cet ensemble permet d'augmenter la capacité de réjection thermique de l'engin spatial sans augmenter la taille des premier et second radiateurs.

Avantageusement, l'ensemble premier dispositif de transfert thermique et premier radiateur auxiliaire présente une masse et un coût faibles.

Suivant des modes particuliers de réalisation, l'engin spatial comporte une ou plusieurs des caractéristiques suivantes :
- Ledit ou lesdits panneau(x) rayonnant(s) porteur du premier radiateur auxiliaire présentent une largeur L comprise entre 10 centimètres et 60 centimètres et de préférence comprise entre 40 centimètres et 50 centimètres ledit ou lesdits panneau(x) rayonnant(s) porteur étant disposés à une distance D comprise entre 1 mètres et 5,2 mètres et de préférence entre 4,3 mètres et 5 mètres par rapport à un plan contenant la face anti-Terre.

Avantageusement, cette dimension et ce positionnement du premier radiateur auxiliaire permettent d'empêcher que les rayons lumineux réfléchis par le radiateur atteignent la partie inférieure du panneau solaire.
- Ledit ou lesdits panneau(x) rayonnant(s) porteur(s) s'étende(nt) perpendiculairement au premier radiateur, ledit ou lesdits panneau(x) rayonnant(s) porteur(s) présentant un angle compris entre 10° et 35° par rapport à au moins une face parmi la face Terre et la face anti-Terre.

Avantageusement, le premier radiateur auxiliaire selon ce premier mode de réalisation est de conception simple et plus rapide, car il permet d'utiliser des caloducs légèrement courbés et d'un seul tenant, sans avoir recours à des raccords complexes, couteux et longs à installer.
- Ledit ou lesdits panneau(x) porteur(s) présente(nt) la forme d'un trapèze rectangle ayant un angle obtus (ρ); ledit angle obtus (ρ) étant disposé adjacent à une face latérale longitudinale du premier radiateur.

Cette forme permet d'avoir une grande surface d'échange thermique tout en respectant l'espace disponible sous coiffe.
- L'engin comporte un panneau solaire fixé sur la face Nord et le premier radiateur auxiliaire est constitué de deux panneaux rayonnants porteurs agencés l'un par rapport à l'autre de manière à former un V pointant en direction dudit panneau solaire.
- Le premier radiateur auxiliaire est constitué d'un unique panneau rayonnant porteur s'étendant parallèlement à au moins une face parmi la face Terre et la face anti-Terre.

Avantageusement, le premier radiateur auxiliaire selon ce deuxième mode de réalisation est de conception simple.
- Le premier radiateur auxiliaire comprend au moins un panneau rayonnant dépourvu d'un dispositif conducteur de chaleur, dit(s) panneau(x) rayonnant(s) non porteur(s), le ou lesdits panneau(x) rayonnant(s) non porteur(s) s'étendant perpendiculairement à au moins une face parmi la face Nord et la face Sud.
- Le ou lesdits panneau(x) rayonnant(s) non porteur(s) s'étende(nt) perpendiculairement à au moins une face parmi la face anti-Terre et le face Terre.
- Le panneau rayonnant porteur comporte une première face principale et une deuxième face principale dirigée vers la Terre et opposée à la première face principale, et dans lequel le ou les panneaux rayonnant(s) non porteurs sont fixé(s) à la première face principale.
- Ledit premier radiateur auxiliaire comprend plusieurs panneaux rayonnant(s) non porteur(s) présentant une largeur différente, et dans lequel ledit panneau rayonnant non porteur de plus grande largeur est agencé dans une partie médiane du panneau rayonnant porteur.
- Le premier radiateur auxiliaire est constitué d'un unique panneau rayonnant s'étendant dans un plan perpendiculaire au premier radiateur et à une face parmi la face Terre et la face anti-Terre.
- Le premier radiateur auxiliaire est constitué d'un unique panneau rayonnant s'étendant dans un plan perpendiculaire à une face parmi la face Terre et la face anti-Terre, ledit plan présentant un angle d'environ 23,5 degrés par rapport au premier radiateur.

Avantageusement, le premier radiateur auxiliaire selon ce mode de réalisation est plus facile à installer.
- Le premier radiateur auxiliaire est constitué de deux panneaux rayonnants porteurs et de deux panneaux rayonnants dépourvus de dispositif conducteur de chaleur, lesdits panneaux rayonnants porteurs étant fixés l'un à l'autre de manière à ce que le plan médian d'un panneau rayonnant porteur forme un angle aigu avec le plan médian de l'autre panneau rayonnant porteur, chaque panneau rayonnant porteur étant en outre fixé à un panneau rayonnant dépourvu de dispositif conducteur de chaleur de manière à ce que le plan médian d'un panneau rayonnant porteur forme un angle aigu avec le plan médian du panneau rayonnant dépourvu de dispositif conducteur de chaleur.

Le ou lesdits panneau(x) rayonnant(s) porteur(s) sont réalisés dans une structure en nid d'abeille.

Avantageusement, le radiateur auxiliaire est plus rigide.
- Au moins un panneau rayonnant porteur est recouvert d'un revêtement de type réflecteur optique solaire (OSR).

L'invention sera mieux comprise à la lecture de la description qui va suivre, donnée uniquement à titre d'exemple et faîte en se référant aux dessins, sur lesquels :
- la figure 1 sont deux courbes représentatives des variations de température des faces + Y et -Y d'un engin spatial selon l'état de la technique au cours d'une année ;
- la figure 2 est une vue schématique d'un l'engin spatial selon l'invention en orbite géostationnaire, l'engin spatial comportant des radiateurs auxiliaires selon un premier mode de réalisation;
- la figure 3 est une vue en perspective schématique de l'engin spatial illustré sur la figure 2 sans panneaux solaires et au cours de l'équinoxe ;
- la figure 4 est une vue en perspective schématique de l'engin spatial illustré sur la figure 3, au moment du solstice d'hiver ;
- la figure 5 est une vue en perspective schématique de l'engin spatial illustré sur la figure 3, au moment du solstice d'été ;
- la figure 6 est deux courbes représentatives des variations de température des faces + Y et -Y de engin spatial illustré sur la figure 2, au cours d'une année ;
- la figure 7 est une vue de face simplifiée de l'engin spatial illustré sur les figures 2 à 5 ;
- la figure 8 est une vue en perspective schématique de l'engin spatial illustré sur les figures 2 à 5 et 7 ;
- la figure 9 est une vue en perspective schématique du premier radiateur auxiliaire de l'engin spatial illustré sur les figures 2 à 5, 7 et 8 ;
- la figure 10 est une vue en perspective schématique d'une variante du premier radiateur auxiliaire ;
- la figure 11 est une vue de face de la face Nord de l'engin spatial illustré sur la figure 2, à 12 heure en heure locale ;
- la figure 12 est une vue de face de la face Nord de l'engin spatial illustré sur la figure 2, à 9 heures ou à 15 heures en heure locale ;
- la figure 13 est une vue de face selon la direction +X du premier radiateur et du panneau solaire de l'engin spatial selon l'état de la technique à minuit en heure locale ;
- la figure 14 est une vue de face selon la direction +X du premier radiateur, du premier radiateur auxiliaire et du panneau solaire de l'engin spatial illustré sur la figure 2 à minuit en heure locale ;
- la figure 15 est une vue en perspective d'un engin spatial selon l'invention comportant un radiateur auxiliaire selon un deuxième mode de réalisation ;
- la figure 16 est une vue en perspective d'un engin spatial selon l'invention comportant un radiateur auxiliaire selon une variante du deuxième mode de réalisation ;
- la figure 17 est une vue en perspective d'un engin spatial selon l'invention comportant un radiateur auxiliaire selon une autre variante du deuxième mode de réalisation ;
- la figure 18 est une vue en perspective d'un engin spatial selon l'invention comportant un radiateur auxiliaire selon un troisième mode de réalisation ;
- la figure 19 est une vue en perspective d'un engin spatial selon l'invention comportant un radiateur auxiliaire selon un quatrième mode de réalisation ;
- la figure 20 est une vue en perspective schématique d'une variante de l'engin spatial selon l'invention, sans panneaux solaires et au cours du solstice d'hiver, l'engin spatial comportant des radiateurs auxiliaires selon le premier mode de réalisation ;
- la figure 21 est une vue en perspective schématique de l'engin spatial illustré sur la figure 20, au cours du solstice d'été ; et
- la figure 22 est deux courbes représentatives des variations de température des faces + Y et -Y de engin spatial illustré sur la figure 21 au cours d'une année.

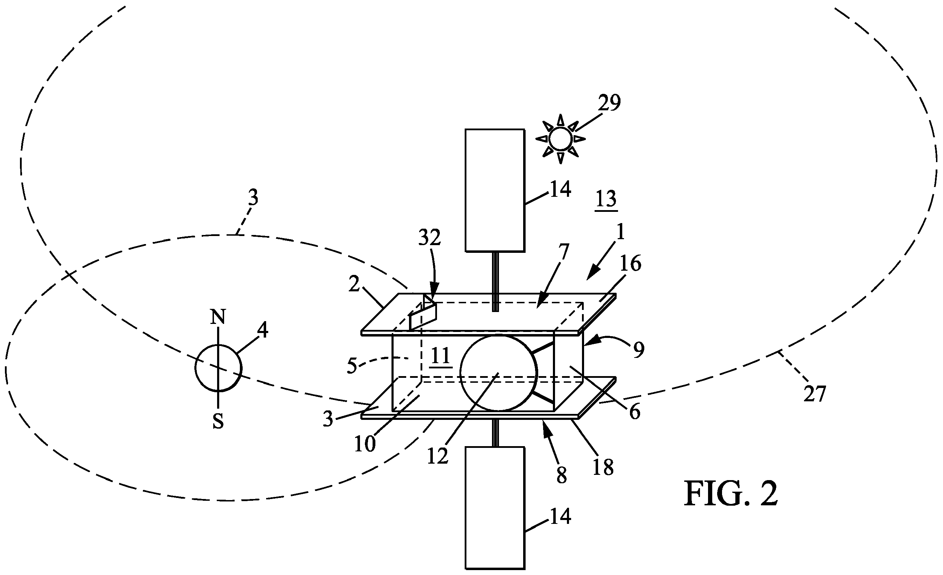

En référence à la figure 2, un engin spatial 1 est propre à tourner sur une orbite 3 autour de la Terre 4, la Terre 4 tournant elle-même sur une orbite 27 autour du Soleil 29.

L'engin spatial 1 du type satellite géostationnaire se présente sous la forme d'un boîtier 2 parallélépipédique délimitant un espace intérieur 11 et un espace extérieur 13. Ce boîtier 2 présente toujours la même face dirigée vers la Terre, cette face étant appelée la face Terre 5. La face opposée et parallèle à la face Terre 5 est quant à elle appelée la face anti- Terre 6.

La face - X, aussi appelée face Est 9, et la face +X, aussi appelée face Ouest 10, sont des faces opposées, parallèles entre elles et perpendiculaires à la direction de déplacement de l'engin spatial 1. Des antennes de communication 12 sont généralement fixées sur les faces -X 9 et +X 10.

La face -Y, aussi appelée face Nord 7, et la face + Y, aussi appelée face Sud 8, sont deux autres faces du boîtier. Elles sont opposées, parallèles entre elles et perpendiculaires à l'axe Nord-Sud de la Terre 4.

Des panneaux solaires 14 sont fixés sur les faces Nord 7 et Sud 8. Enfin, un premier radiateur principal 16, généralement appelé radiateur Nord, est fixé à et s'étend sur la face Nord 7. Un second radiateur principal 18, généralement appelé radiateur Sud, est fixé à et s'étend sur la face Sud 8.

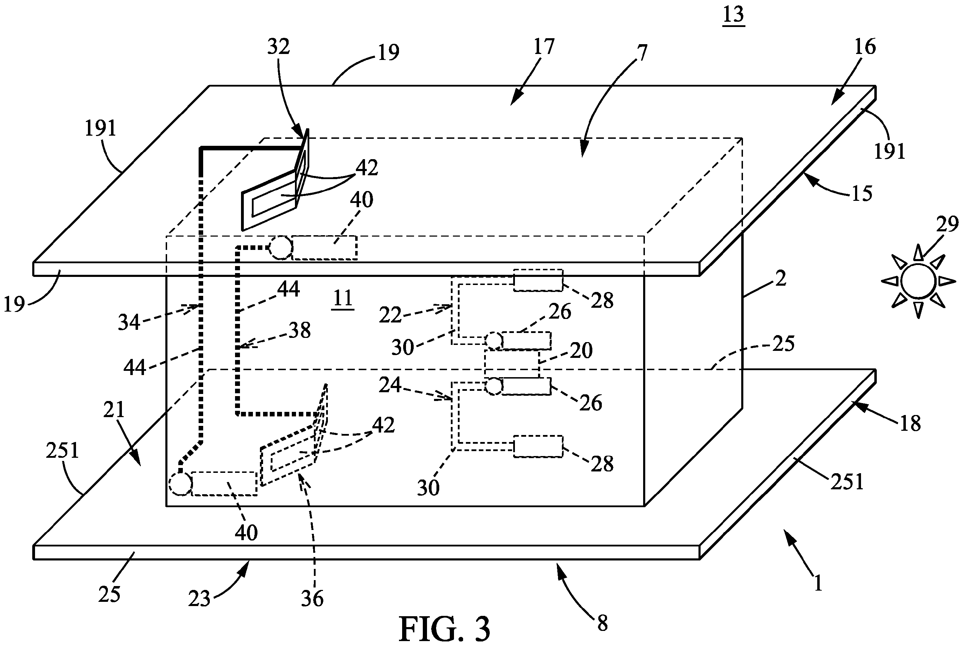

En référence à la figure 3, le premier 16 et le second 18 radiateurs ont une forme générale parallélépipédique. Ils présentent chacun deux faces latérales longitudinales 19, 25 et deux faces latérales transversales 191, 251, une face principale interne 15, 21 fixée au boîtier 2, une face principale externe 17,23 opposée à la face principale interne et située du côté de l'espace extérieur 13.

L'engin spatial 1 transporte des équipements électroniques 20 ainsi qu'un premier 22 et un second 24 dispositifs de transfert thermique principaux propres à refroidir les équipements électroniques 20. Les équipements électroniques comprennent de façon classique des équipements de radiofréquences, des équipements électroniques, des instruments de mesure, des unités de calcul et des batteries. Le premier dispositif de transfert thermique principal 22 relie thermiquement les équipements électroniques 20 au premier radiateur 16. Le second dispositif de transfert thermique principal 24 relie thermiquement les équipements électroniques 20 au second radiateur 18.

De façon classique, les premier 22 et second 24 dispositifs de transfert thermique principaux comprennent chacun un évaporateur 26 en contact thermique avec des équipements électroniques 20, un condenseur 28 en contact thermique avec le premier radiateur 16 et respectivement le second radiateur 18, et des conduites 30 de transport d'un fluide caloporteur reliant l'évaporateur 26 au condenseur 28. Par convention, les évaporateurs sont schématisés sur les figures par un ensemble cercle et rectangle et les condenseurs par un rectangle. Ces dispositifs de transfert thermique principaux 22 et 24 peuvent être classiquement des caloducs (en l'anglais « Heat Pipes ») ou des boucles fluides capillaires dans lesquelles le réservoir à fluide est intégré dans l'évaporateur (en l'anglais « Loop Heat Pipe »).

Selon l'invention, l'engin spatial 1 comporte en outre un premier radiateur auxiliaire 32 fixé au premier radiateur 16, un premier dispositif de transfert thermique auxiliaire 34 propre à transférer de la chaleur du premier radiateur auxiliaire 32 à la face interne 21 du second radiateur, un second radiateur auxiliaire 36 fixé au second radiateur 18, et un second dispositif de transfert thermique auxiliaire 38 propre à transférer de la chaleur du second radiateur auxiliaire 36 à la face internel 5 du premier radiateur.

Le premier 34 et le second 38 dispositifs de transfert thermique auxiliaires sont identiques. Ils sont non réversibles, c'est-à-dire qu'ils sont mono-directionnels. Ils comprennent chacun un évaporateur 40, un ensemble condenseur 42 et des tuyauteries 44 reliant thermiquement l'évaporateur 40 à l'ensemble condenseur 42. Préférentiellement, il s'agira d'une boucle à pompage capillaire (en anglais « Capillary Driven Loop/CDL ») et en particulier d'une boucle fluide capillaire dans laquelle le réservoir à fluide est intégré dans l'évaporateur (en l'anglais « Loop Heat Pipe »), Ces dispositifs sont bien connus de l'homme du métier. On se réfèrera notamment à la norme ECSS-E-ST-31-02C du 12/12 2012.

L'évaporateur 40 du premier dispositif de transfert thermique auxiliaire est en contact thermique avec la face principale interne 21 du second radiateur 18. L'évaporateur 40 du second dispositif de transfert thermique auxiliaire est quant à lui en contact thermique avec la face principale interne 15 du premier radiateur. L'ensemble condenseur 42 du premier dispositif de transfert thermique auxiliaire est en contact thermique avec le premier radiateur auxiliaire 32. L'ensemble condenseur 42 du second dispositif de transfert thermique auxiliaire est en contact thermique avec le second radiateur auxiliaire 36.

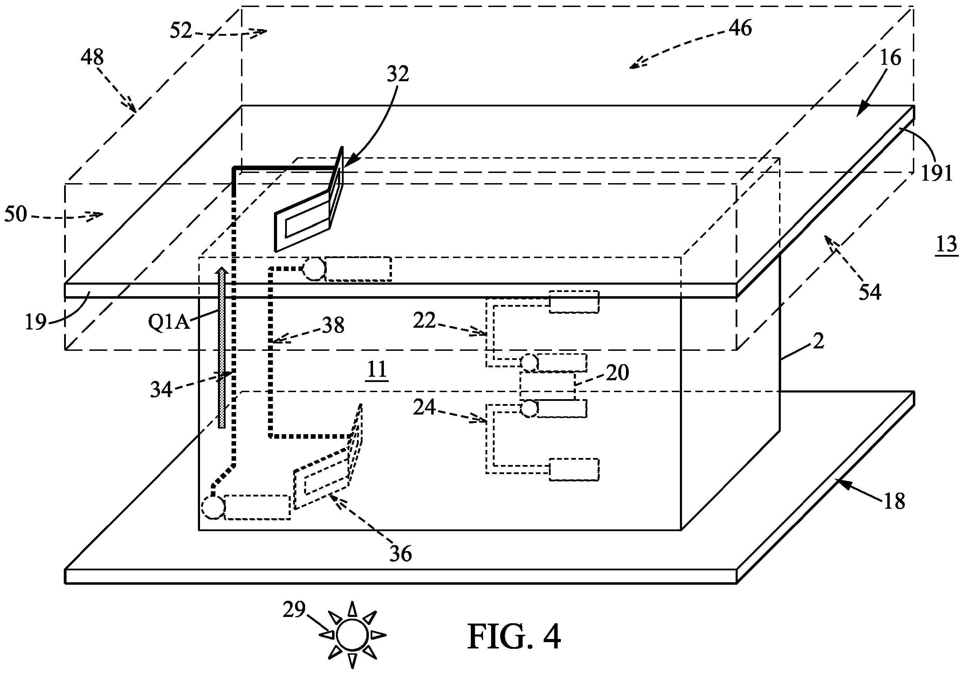

Le premier radiateur auxiliaire 32 et le premier dispositif de transfert thermique auxiliaire 34 permettent de refroidir le second radiateur 18 lorsque celui-ci est exposé aux rayonnements solaires, c'est-à-dire lors du solstice d'hiver (WS). En effet, comme visible sur la figure 4, lors du solstice d'hiver, le second radiateur 18 est exposé aux rayonnements solaires tandis que le premier radiateur auxiliaire 32 est situé dans l'ombre du boîtier du satellite. La différence de température entre le second radiateur 18 et le premier radiateur auxiliaire 32 engendre un transfert d'une partie Q1A de chaleur du second radiateur 18 vers le premier radiateur auxiliaire 32 par l'intermédiaire du premier dispositif de transfert thermique auxiliaire 34. Cette partie Q1A de chaleur est évacuée vers l'espace extérieur 13 par le premier radiateur auxiliaire 32.

En conséquence, comme visible sur la figure 6, la température de la face Sud 8 (face +Y) diminue au cours du solstice d'hiver, réduisant l'écart de température entre les faces Nord 7 et Sud 8.

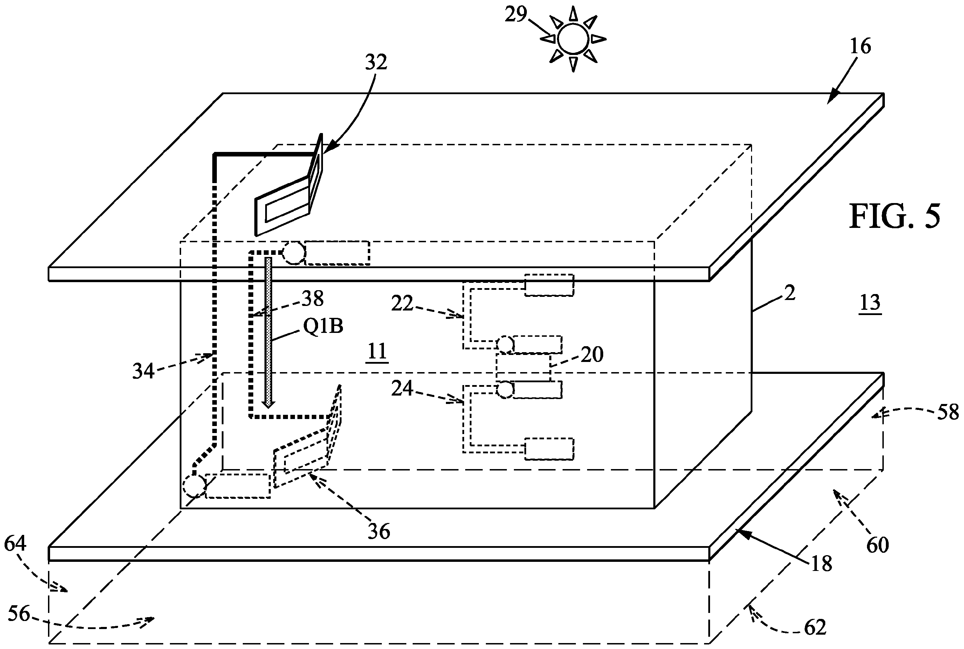

De la même façon, le second radiateur auxiliaire 36 et le second dispositif de transfert thermique auxiliaire 38 permettent de refroidir le premier radiateur 16 lorsque celui-ci est exposé aux rayonnements solaires, c'est-à-dire lors du solstice d'été (SS). Comme visible sur la figure 5, lors du solstice d'été, le premier radiateur 16 est exposé aux rayonnements solaires tandis que le second radiateur auxiliaire 36 est situé dans l'ombre du boîtier du satellite. La différence de température entre le premier radiateur 16 et le second radiateur auxiliaire 36 engendre le transfert d'une partie Q1B de chaleur du premier radiateur 16 vers le second radiateur auxiliaire 36 par l'intermédiaire du second dispositif de transfert thermique auxiliaire 38. Cette partie Q1B de la chaleur est évacuée par le second radiateur auxiliaire 36 qui est situé du côté ombre au cours du solstice d'été.

Ainsi, comme visible sur la figure 6, la température de la face Nord 7 (face - Y) diminue, au cours du solstice d'été, réduisant l'écart de température entre les faces Nord 7 et Sud 8.

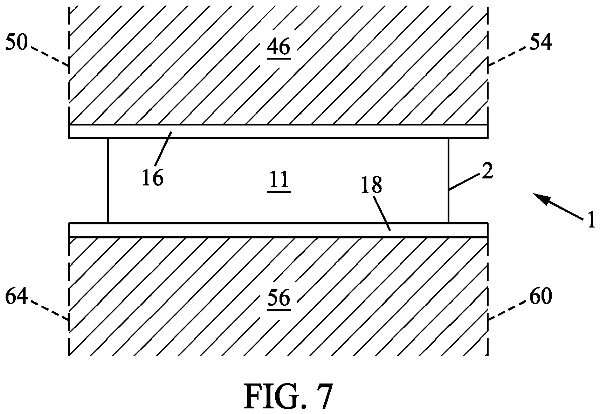

Afin de permettre ce transfert de chaleur, les premier 32 et second 36 radiateurs auxiliaires sont chacun disposés dans l'ombre du premier radiateur et respectivement du second radiateur au cours d'un solstice. Ainsi, le premier radiateur auxiliaire 32 est disposé dans le prolongement du premier radiateur 16, selon une direction perpendiculaire à la face Nord 7 du premier radiateur 16. Il s'étend dans une première portion 46 de l'espace extérieur 13 qui est située à l'ombre au cours du solstice d'hiver. Cette première portion 46 est délimitée par la face principale externe 17 du premier radiateur et par quatre plans 48, 50, 52, 54 contenant chacun une face latérale 19 du premier radiateur, comme représenté schématiquement sur les figures 4 et 7.

De la même façon, le second radiateur auxiliaire 36 est disposé dans le prolongement du second radiateur 18, selon une direction perpendiculaire à la face Sud +Y du second radiateur 18. Il s'étend dans une seconde portion 56 de l'espace extérieur 13 qui est située à l'ombre au cours du solstice d'été. Cette seconde portion 56 est délimitée par la face principale externe 23 du second radiateur et par quatre plans 58, 60, 62, 64 contenant chacun une face latérale 25 du second radiateur comme représenté schématiquement sur les figures 5 et 7.

Le premier 32 et le second 36 radiateurs auxiliaires sont, par exemple, agencés au-dessus des panneaux solaires 14 lorsque ces derniers sont repliés en configuration de lancement. Ils présentent une dimension faible selon la direction normale aux première 7 et seconde 8 faces car ils doivent pouvoir se loger dans l'espace sous coiffe du lanceur.

Les premier 32 et second 36 radiateurs auxiliaires sont préférentiellement isolés thermiquement des premier 16 et second 18 radiateurs qui les supportent. Cette isolation thermique est, par exemple réalisée en plaçant des rondelles en plastique dans les pieds de fixation des radiateurs auxiliaires 32, 36 aux radiateurs principaux 16, 18.

Avantageusement, cette isolation thermique permet d'augmenter considérablement l'efficacité des radiateurs auxiliaires 32, 36. En effet, comme visible sur la figure 1, le premier radiateur 16 et le second radiateur 18 présentent, même lorsqu'ils sont à l'ombre, une température avoisinant les 60 °C. Comme les radiateurs auxiliaires 32, 36 sont isolés des radiateurs principaux 16, 18, ils présentent une température beaucoup plus faible que la température du radiateur fixé sur la face opposée du boîtier 2 de sorte qu'ils sont capables d'absorber de manière efficace une grande quantité de chaleur provenant de ce radiateur. Ainsi, malgré leur petite taille, ils permettent d'évacuer efficacement la chaleur reçue.

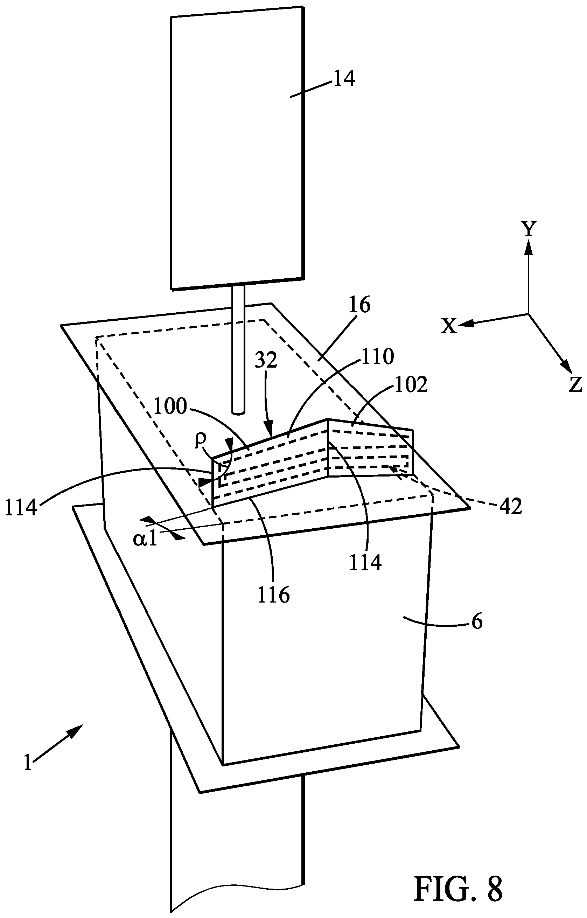

En référence à la figure 8, le premier radiateur auxiliaire 32 selon le **premier mode de réalisation** est constitué uniquement par un premier panneau rayonnant 100 supportant une partie de l'ensemble condenseur 42 et par un second panneau rayonnant 102 supportant l'autre partie de l'ensemble condenseur 42. Comme ces deux panneaux rayonnants portent l'ensemble condenseur 42, ils sont appelés ci-après premier 100 et second 102 panneaux rayonnants porteurs.

Le premier panneau rayonnant porteur 100 présente une première face principale 110, une deuxième face principale 112 opposée à la première face principale, deux tranches latérales 114 et deux tranches longitudinales 116. Il est réalisé avantageusement dans une structure en nid d'abeille.

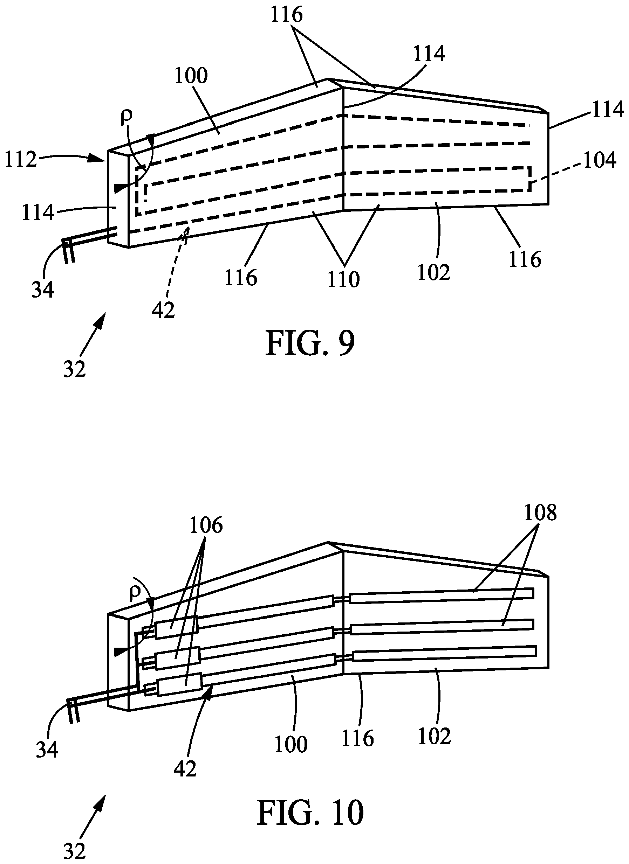

Le second panneau rayonnant porteur 102 est similaire au premier panneau rayonnant porteur 100 et ne sera pas décrit en détail. En référence à la figure 9, l'ensemble condenseur 42 est par exemple constitué par un tube condenseur 104 qui s'étend sur la surface du premier 100 et du second 102 panneaux porteurs. Dans l'exemple représenté, le tube condenseur 104 est disposé de manière à former un motif en forme de serpentin ayant quatre branches longitudinales. Ce tube condenseur 104 est traversé par le fluide calorifique du premier dispositif de transfert thermique auxiliaire 34.

Dans l'exemple représenté, le tube condenseur 104 est intégré aux panneaux rayonnants porteurs. En variante, il peut être disposé sur une des faces principales des panneaux rayonnants porteurs.

Selon une variante illustrée sur la figure 10, l'ensemble condenseur 42 comprend trois condenseurs 106 connectés fluidiquement avec le premier dispositif de transfert thermique auxiliaire 34 et trois caloducs 108 chacun en échange thermique avec un condenseur 106. Les trois condenseurs 106 sont disposés les uns à côté des autres le long du côté latéral libre du premier panneau rayonnant porteur 100. Chaque caloduc 108 s'étend sur le premier 100 et le second 102 panneaux rayonnants porteurs selon une direction parallèle aux côtés longitudinaux 116 des panneaux rayonnants porteurs.

Dans l'exemple représenté, les condenseurs 106 et les caloducs 108 sont disposés sur une des faces principales du panneau rayonnant. En variante, ils peuvent être intégrés à celui-ci.

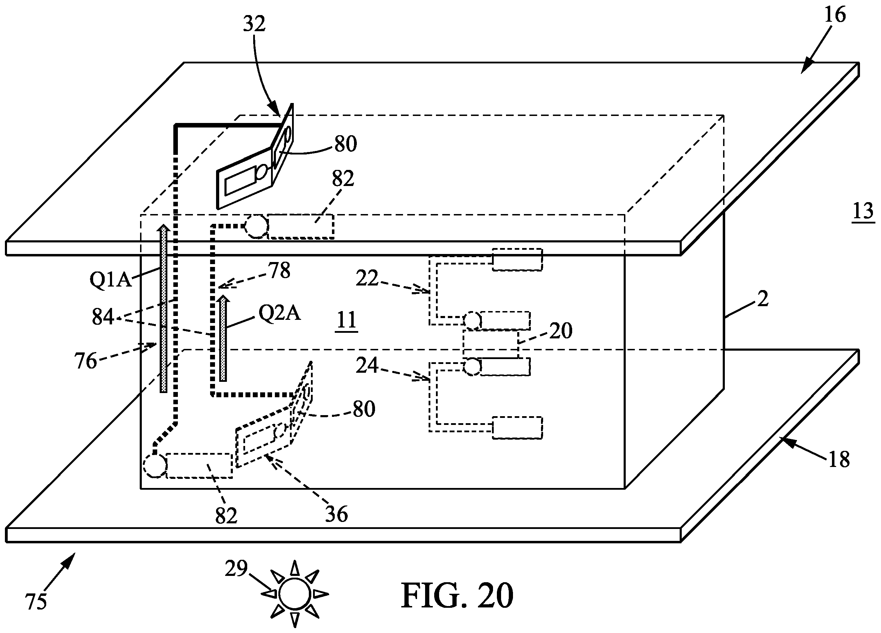

En variante, les dispositifs de transfert thermique 34, 38 sont réversibles. Dans ce cas, les ensembles condenseurs 42 sont remplacés par des ensembles échangeurs de chaleur, comme décrit en détail ci-après en liaison avec les figures 20 à 22. Les ensembles condenseurs 42 et les ensembles échangeurs de chaleur sont désignés de façon générale par le terme « dispositifs conducteurs de chaleur » dans les revendications.

En référence à la figure 8, les premier 100 et second panneaux rayonnants porteurs s'étendent perpendiculairement au premier radiateur 16.

Le plan médian du premier panneau rayonnant porteur 100 présente un premier angle α1 par rapport au plan médian de la face anti-Terre 6. Le premier angle α1 est compris entre 10° et 35°.

Le plan médian du second panneau rayonnant porteur présente un second angle α2 par rapport au plan médian de la face anti-Terre 6. Dans l'exemple représenté, le second angle α2 est égal à - α1.

En variante, le premier angle α1 peut être différent du second angle α2.

De préférence, le premier angle α1 et le second angle α2 sont compris entre 15° et 30°.

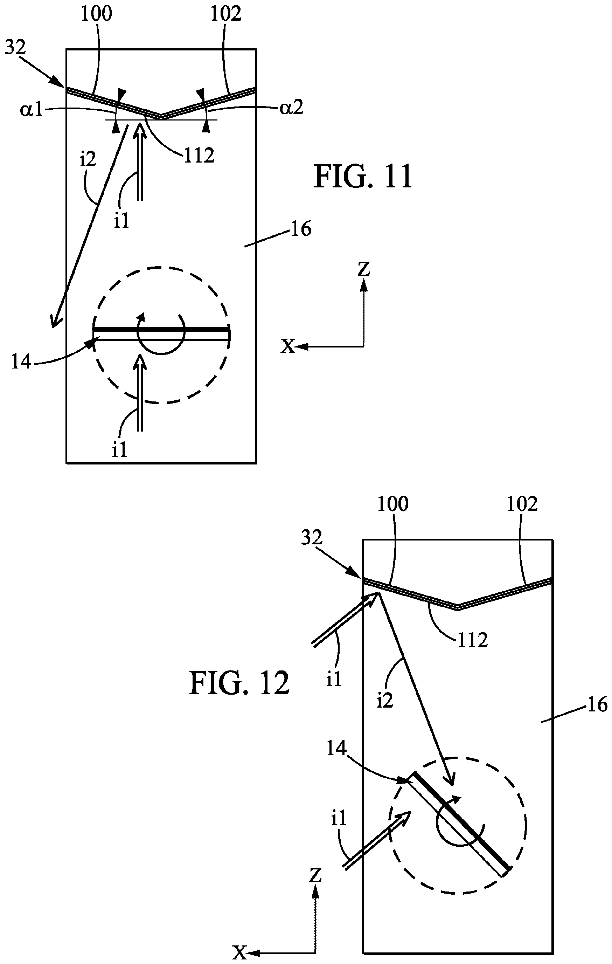

Comme illustré sur la figure 11, l'inclinaison des panneaux rayonnants porteurs 100, 102 par rapport à la face anti-Terre 6 permet avantageusement de réfléchir le rayonnement solaire incident i1 à l'écart de la face arrière du panneau solaire 14, lorsque ce rayonnement solaire i1 est dirigé selon la direction +Z, c'est-à-dire à 12 heures (midi) en l'heure locale. Ainsi, la face du radiateur auxiliaire située du côté du panneau solaire 14, dite deuxième face principale 112, réfléchit le rayonnement solaire i2 à l'écart du panneau solaire. Le radiateur auxiliaire 32 selon ce mode de réalisation permet ainsi d'éviter une surchauffe et une détérioration du panneau solaire 14 résultant de cette surchauffe.

Pour améliorer cette réflexion, les panneaux rayonnants porteurs 100, 102 sont de préférence revêtus d'un revêtement spécifique de plusieurs types. Le choix d'un revêtement résulte d'un compromis entre son coût et sa performance.

Ainsi, un revêtement standard de type réflecteur optique solaire (généralement appelé « OSR ») peut être utilisé sur les premières faces principales 110 (+Z) et les deuxièmes faces principales 112 (-Z). Un tel revêtement est utilisé dans la majorité des cas car il est plus le plus performant.

En variante, un revêtement de type peinture blanche peut être utilisé sur les premières faces principales 110 (+Z) et les deuxièmes faces principales 112 (-Z) car il est moins couteux, mais également moins performant.

Une autre variante consisterait à combiner à la fois un revêtement de type « OSR » et de type peinture blanche. Ainsi, on pourrait utiliser un revêtement de type « OSR » sur la première face principale 110 (+Z) et un revêtement de type peinture blanche sur la deuxième face principale 112 (-Z) pour permettre une réflexion solaire diffuse vers les appendices du satellite. Cette variante offre un bon compromis entre cout et performance.

A 9 heures ou 15 heures en heure locale, le rayonnement solaire incident i1 est dirigé selon une direction X-Z illustrée sur la figure 12. A cette heure, le rayonnement solaire réfléchi i2 par le premier radiateur auxiliaire 32 atteint la face arrière du panneau solaire 14, comme illustré sur la figure 12. Toutefois, à cet horaire, le rayonnement solaire i2 présente une intensité affaiblie découlant de l'incidence angulaire faible sur le panneau solaire 14 de sorte que celle-ci n'endommage pas le panneau solaire 14.

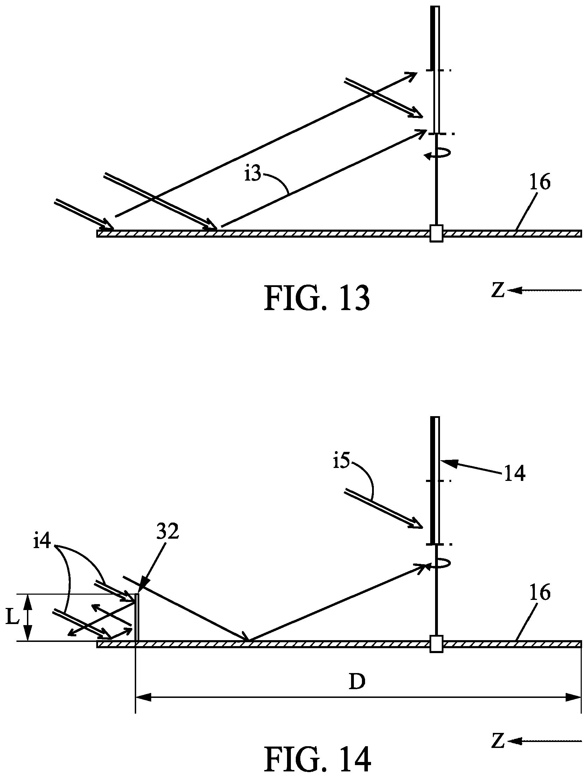

De préférence, en référence aux figures 13 et 14, le premier 100 et le second 102 panneaux rayonnants porteurs présentent une largeur L comprise entre 100 et 600 millimètres et les panneaux rayonnants porteurs 100, 102 sont fixés au premier radiateur 16 à une distance D comprise entre 1 mètre et 5,2 mètres du plan contenant la face anti-Terre 6. Cette distance D est mesurée le long d'une droite perpendiculaire au plan contenant la face anti-Terre 6.

De préférence, cette largeur L est comprise entre 400 millimètres et 500 millimètres.

De préférence, cette distance D est comprise entre 4,3 mètres et 5 mètres.

Sans perte de généralité, l'invention est également adaptée pour fonctionner sur des satellites de taille plus petite, en orbite GEO ou sur d'autres orbites telles que LEO ou HEO. Dans ces cas-là, les dimensions des panneaux rayonnants porteurs et leur emplacement sur les radiateurs sont adaptés pour conserver les mêmes fonctions que décrites ci-dessus.

Avantageusement, cette largeur L des panneaux rayonnants porteurs 100, 102 et ce positionnement du premier radiateur auxiliaire 32 à une distance D permettent d'empêcher que les rayons lumineux réfléchis i3 par le premier radiateur auxiliaire 32 atteignent la partie inférieure du panneau solaire 14. En effet, en l'absence de premier radiateur auxiliaire 32, lorsque le rayonnement solaire est dirigé selon la direction -Z, le premier radiateur 16 réfléchi le rayonnement solaire incident i3 vers la partie inférieure du panneau solaire comme visible sur la figure 13. L'intensité lumineuse atteignant les cellules photovoltaïques du panneau solaire 14 correspond à l'intensité lumineuse du rayonnement solaire direct et à l'intensité lumineuse du rayonnement solaire réfléchi. Cette intensité lumineuse est importante et endommage les cellules photovoltaïques du panneau solaire 14 de sorte que, en général, dans les satellites actuels la partie inférieure du panneau solaire 14, n'est pas pourvue de cellules photovoltaïques, résultant en une perte de puissance électrique pour la charge utile.

Avantageusement, selon l'invention, lorsqu'un premier radiateur auxiliaire 32 ayant une largeur L et une position définie par la distance D est fixé sur le premier radiateur 16 comme illustré sur la figure 14, le rayonnement solaire incident i4 dirigée selon la direction -Z atteint le premier radiateur auxiliaire 32. Il n'est pas réfléchi vers le panneau solaire 14. La partie inférieure du panneau solaire 14 ne réceptionne que le rayonnement solaire direct i5. L'intensité lumineuse du rayonnement solaire direct est supportée par les cellules photovoltaïques. Ainsi, lorsqu'un premier radiateur auxiliaire 32 ayant une largeur L et une position comme définie ci-dessus est fixé sur le premier radiateur 16, la partie inférieure du panneau solaire 14 peut avantageusement comporter des cellules photovoltaïques. Il en résulte un gain en énergie électrique produite pour le satellite.

En référence à la figure 8, une tranche longitudinale 116 des panneaux rayonnants porteurs 100, 102 est fixée au premier radiateur 16. Une tranche latérale 114 du premier panneau rayonnant porteur est fixée à une tranche latérale 114 du second panneau rayonnant porteur de manière à ce que les deux panneaux forment un V ou un triangle, lorsqu'ils sont vus selon l'axe Y. Le V formé par les deux panneaux rayonnants porteurs 100, 102 pointe en direction du panneau solaire 14.

Dans le mode de réalisation représenté, la face principale 110 du premier et du second panneaux rayonnants porteurs présente la forme d'un trapèze rectangle. Cette forme permet avantageusement de bénéficier d'une grande surface de rayonnement en profitant au maximum de l'espace circulaire disponible sous coiffe tout en étant simple à réaliser.

Par exemple, une tranche latérale 114 des panneaux rayonnants porteurs mesure 400 millimètres et l'autre tranche 114 des panneaux rayonnants porteurs mesure 500 millimètres.

Les tranches longitudinales 116 du premier panneau rayonnant porteur mesurent par exemple 1150 millimètres. Dans le mode de réalisation représenté, les tranches longitudinales 116 du second panneau rayonnant porteur mesurent 700 millimètres.

La tranche latérale 114 de chaque panneau rayonnant porteur fixée à la tranche latérale 114 de l'autre panneau rayonnant porteur est la tranche latérale ayant la plus grande dimension. Ainsi, le premier radiateur auxiliaire 32 présente une forme en V inversé lorsque le premier radiateur est vu selon l'axe Z illustré sur la figure 8.

Le panneau rayonnant porteur en forme de trapèze rectangle présente un angle obtus (p) disposé adjacent à la face latérale longitudinale 19 du premier radiateur.

En variante, un nombre différent de condenseur est monté sur les panneaux rayonnants porteurs.

En variante, le premier angle α1 ou le second angle α2 est nul. Dans ce cas, le plan médian du premier ou du second panneau rayonnant porteur est parallèle à la face anti-Terre 6.

En variante, le premier et le second angles α1, α2 sont définis par rapport à la face Terre.

Selon une variante non représentée, le premier radiateur auxiliaire 32 est constitué d'un unique panneau rayonnant 100 qui s'étend perpendiculairement au premier radiateur et qui présente un angle compris entre 10° et 35° par rapport à la face anti-Terre 6.

En variante, les faces principales 110, 112 des panneaux rayonnants porteurs présentent la forme d'un rectangle.

En variante, le premier radiateur auxiliaire présente un unique panneau rayonnant porteur en forme de trapèze rectangle dont l'angle obtus (p) est disposé adjacent à la face latérale longitudinale 19 du premier radiateur.

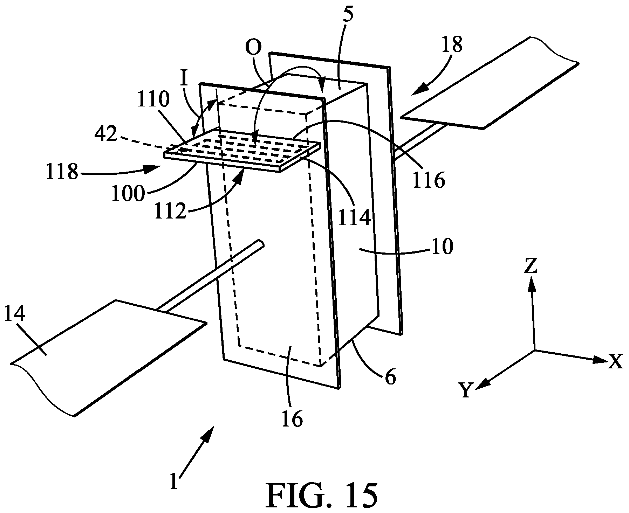

Les figures 15 à 19 représentent différents modes de réalisation du premier radiateur auxiliaire. Ces différents modes de réalisation comprennent des éléments identiques ou similaires aux éléments du premier radiateur auxiliaire selon le premier mode de réalisation de l'invention. Ces éléments identiques ou similaires portent les mêmes références que dans la description du premier radiateur auxiliaire selon le premier mode de réalisation et ne seront pas décrits une seconde fois. Seules les caractéristiques particulières à chacun de ces modes de réalisation sont décrites ci-après.

Un premier radiateur auxiliaire 118 selon un **deuxième mode de réalisation** de l'invention est illustré sur la figure 15. Le premier radiateur auxiliaire 118 selon ce deuxième mode de réalisation est constitué d'un unique panneau rayonnant 100 supportant un ensemble condenseur 42, dit panneau rayonnant porteur.

Le panneau rayonnant porteur 100 du radiateur auxiliaire 118 selon ce deuxième mode de réalisation présente une première face principale 110 dirigée selon la direction +Z, une deuxième face principale 112 opposée à la première face principale, deux tranches latérales 114 et deux tranches longitudinales 116. Il peut être réalisé dans une structure en nid d'abeille et revêtu d'un revêtement de type réflecteur optique solaire ou de la peinture blanche. Dans le mode de réalisation représenté, il présente une forme rectangulaire.

L'ensemble condenseur 42 porté par le panneau rayonnant porteur est similaire à l'ensemble condenseur 42 décrit pour le premier radiateur auxiliaire 32 et ne sera pas décrit à nouveau.

Dans le mode de réalisation représenté, le panneau rayonnant porteur 100 est fixé au premier radiateur 16 de manière à ce que le plan médian du panneau rayonnant porteur soit parallèle au plan contenant la face anti-Terre 5. L'angle I = (Y, Z) par rapport au repère (X, Y, Z) représenté sur la figure 15 est égal à 90°. L'angle O = (X, Z) par rapport au repère (X, Y, Z) représenté sur la figure 15 est égal à 0°.

En variante, le panneau rayonnant porteur 100 est fixé au premier radiateur 16 de manière à présenter un angle d'inclinaison O par rapport au plan contenant la face anti-Terre 5 et/ou et de manière à présenter un angle d'inclinaison I différent de 90° par rapport au premier radiateur 16.

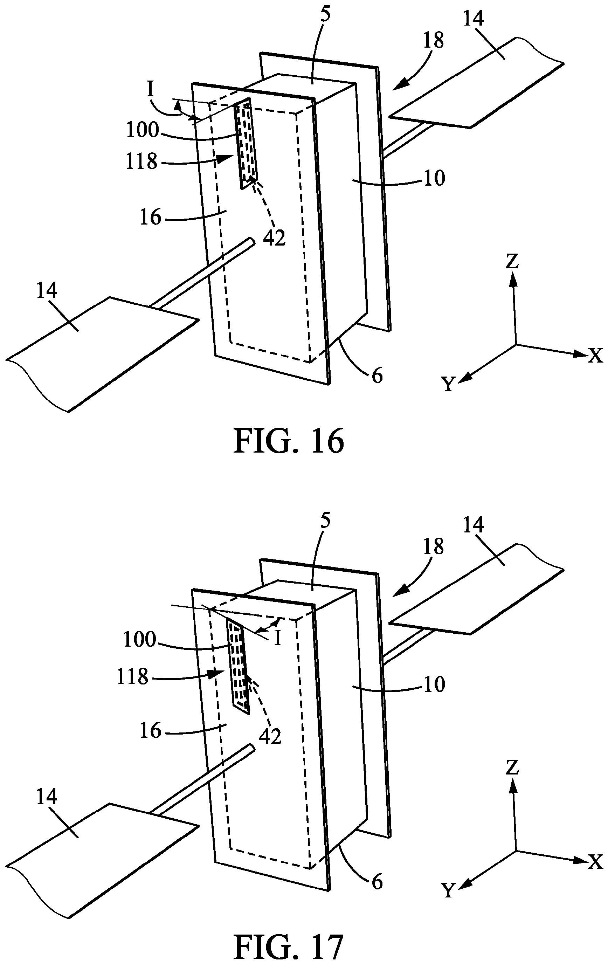

Par exemple, sur la figure 16, le premier radiateur auxiliaire 118 selon le deuxième mode de réalisation est fixé au premier radiateur 16 de manière à s'étendre perpendiculairement au premier radiateur 16 et perpendiculairement à la face anti-Terre 5. Dans ce cas, les angles d'inclinaison O et I sont égaux à 90°.

Selon un autre exemple illustré sur la figure 17, le premier radiateur auxiliaire 118 selon le deuxième mode de réalisation est fixé au premier radiateur 16 de sorte que l'angle d'inclinaison O soit égal à 90°et l'angle d'inclinaison I soit égal à 23,5°.

Avantageusement, ce mode de réalisation est plus simple à mettre en oeuvre.

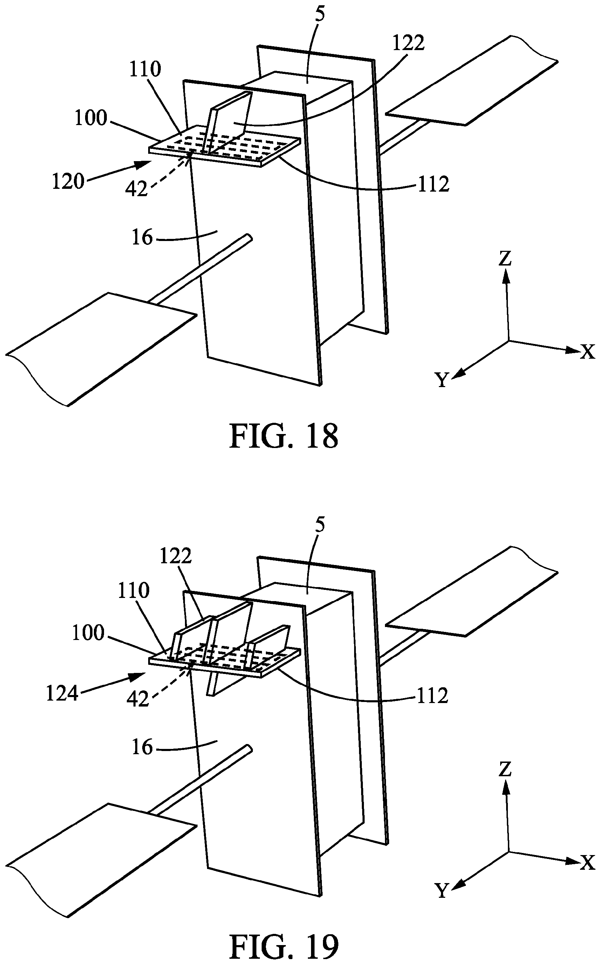

Un premier radiateur auxiliaire 120 selon un **troisième mode de réalisation** de l'invention est illustré sur la figure 18. Le premier radiateur auxiliaire 120 selon ce troisième mode de réalisation est constitué d'un unique panneau rayonnant 100 supportant un ensemble condenseur 42, dit panneau rayonnant porteur et d'un panneau rayonnant dépourvu d'un ensemble condenseur, dit panneau rayonnant non porteur 122.

Le panneau rayonnant porteur 100 et l'ensemble condenseur 42 du radiateur auxiliaire selon ce troisième mode de réalisation est identique au panneau rayonnant porteur 100 et respectivement à l'ensemble condenseur 42 du radiateur auxiliaire selon le deuxième mode de réalisation et ne seront pas décrits à nouveau.

De préférence, l'ensemble condenseur 42 est fixé à la deuxième face principale 112 ou est intégré dans le panneau.

Le panneau rayonnant porteur 100 du radiateur auxiliaire présente une forme rectangulaire.

Il est fixé au premier radiateur 16 de manière à s'étendre perpendiculairement à celui-ci et perpendiculairement à la face anti-Terre 6.

Le panneau rayonnant non porteur 122 est fixé à la première face principale 110 de manière à s'étendre perpendiculairement au panneau rayonnant porteur 100 et au premier radiateur 16. Le premier radiateur auxiliaire 120 présente la forme d'un T, la branche centrale de ce T étant dirigée selon la direction +Z.

En variante, le panneau rayonnant non porteur 122 peut présenter un angle différent de 90° par rapport au panneau rayonnant porteur.

En variante, le panneau rayonnant non porteur 122 peut être décentré par rapport au mileu du panneau rayonnant porteur formant ainsi un T avec une branche centrale plus ou moins décentrée.

Un premier radiateur auxiliaire 124 selon un **quatrième mode de réalisation** de l'invention est illustré sur la figure 19. Le premier radiateur auxiliaire 124 selon ce quatrième mode de réalisation est constitué d'un unique panneau rayonnant 100 supportant un ensemble condenseur 42, dit panneau rayonnant porteur et de plusieurs panneaux rayonnants 122 dépourvus d'un ensemble condenseur, dit panneaux rayonnants non porteurs.

Le panneau rayonnant porteur 100 et l'ensemble condenseur 42 du premier radiateur auxiliaire selon ce quatrième mode de réalisation est identique au panneau rayonnant porteur 100 et respectivement à l'ensemble condenseur 42 du radiateur auxiliaire 118 selon le deuxième mode de réalisation et ne seront pas décrits à nouveau.

Dans ce mode de réalisation, l'ensemble condenseur 42 est intégré dans le panneau.

Les panneaux rayonnants non porteurs 122 présentent une forme rectangulaire. Ils présentent une largeur différente. Dans l'exemple représenté, trois panneaux rayonnants non porteurs sont fixés à la première face principale 110 et un panneau rayonnant non porteur est fixé à la seconde face principale 112 du panneau rayonnant porteur.

En variante, un nombre différent de panneaux rayonnants non porteurs sont fixés sur chaque face du panneau rayonnant porteur.

Dans le mode de réalisation représenté, les panneaux rayonnants non porteurs 122 s'étendent perpendiculairement au premier radiateur 16 et perpendiculairement au panneau rayonnant porteur 100. En variante ils peuvent présenter un angle différent de 90° par rapport au panneau rayonnant porteur 100.

De préférence, les panneaux rayonnants non porteurs 122 de plus grande largeur sont agencés dans une partie médiane du panneau rayonnant porteur 100.

Selon une variante non représentée, le premier radiateur auxiliaire présente la forme générale d'un M ou d'un W. Il comporte deux panneaux rayonnants porteurs 100 fixé l'un à l'autre par la tranche de manière à former un V et de deux panneaux rayonnants dépourvus de dispositif conducteur de chaleur 122. Chaque panneau rayonnant non porteur est fixé à la tranche libre de chaque panneau rayonnant porteur de manière à former un V.

Les panneaux rayonnants non porteurs ont une fonction d'ailettes thermiques agissant par conduction. Ils sont préférentiellement réalisés en Aluminium ou dans un matériau flexible tel que du graphoil ou du graphoil pyrolytique tel que de l'HiPeR.

Tout comme le premier radiateur auxiliaire 32 selon le premier mode de réalisation, le premier radiateur auxiliaire selon le deuxième, le troisième et le quatrième modes de réalisation présentent une largeur L comprise entre 400 et 500 millimètres et ils sont fixés au premier radiateur 16 à une distance D comprise entre 1 mètre et 5,2 mètres, et de préférence entre 4,3 mètres et 5 mètres du plan contenant la face anti-Terre 6. Ainsi, le premier radiateur auxiliaire selon ces deuxième, troisième et quatrième modes de réalisation permettent d'empêcher les rayonnements solaires dirigés selon la direction -Z d'atteindre la partie inférieure du panneau solaire.

Le second radiateur auxiliaire 36 est identique au premier radiateur auxiliaire 32 et ne sera pas décrit en détail.

Les figures 20 à 22 illustrent une variante de l'engin spatial 1. Dans cette variante, l'engin spatial 75 est similaire à l'engin spatial selon décrit ci-dessus à l'exception du fait que le premier 76 et le second 78 dispositifs de transfert thermique auxiliaires sont réversibles ou dit autrement bidirectionnels.

Les éléments de l'engin spatial 75 selon cette variante identiques ou similaires aux éléments de l'engin spatial 1 décrit ci-dessus porteront les mêmes références et ne seront pas décrits une seconde fois.

Le premier dispositif de transfert thermique auxiliaire 76 de cette variante comporte un premier ensemble échangeur de chaleur 80 en contact thermique avec le premier radiateur auxiliaire 32, un second échangeur de chaleur 82 en contact thermique avec la face interne du second radiateur 18, et des caloducs 84 (de l'anglais « heat pipe (HP)») reliant le premier ensemble échangeur de chaleur 80 au second échangeur de chaleur 82. Des boucles fluides réversibles, notamment des boucles fluides capillaires dans lesquelles le réservoir à fluide est intégré dans l'évaporateur (en l'anglais « Loop Heat Pipe ») réversibles peuvent être utilisées.

Le premier ensemble échangeur de chaleur 80 et le second échangeur de chaleur 82 sont propres à fonctionner en tant qu'évaporateur ou en tant que condenseur. Sur les figures 8 et 9, le premier ensemble échangeur de chaleur 80 et second échangeur de chaleur 82 ont été représentés par un cercle et un rectangle.

Dans cette variante, le premier ensemble échangeur de chaleur 80 peut être réalisé par un tube échangeur de chaleur similaire au tube condenseur 104 de la figure 9, soit par un ou plusieurs échangeurs de chaleur et des caloducs 108 en contact thermique avec le ou les échangeurs de chaleur, comme dans l'exemple de la figure 10.

Le premier ensemble échangeur de chaleur est un dispositif conducteur de chaleur au sens de l'invention.

Les éléments constitutifs du second dispositif de transfert thermique auxiliaire 78 sont identiques aux éléments constitutifs du premier dispositif de transfert thermique auxiliaire 76 et ne seront pas décrits en détail.

Le premier ensemble échangeur de chaleur 80 du second dispositif de transfert thermique auxiliaire 78 est en contact thermique avec le second radiateur auxiliaire 36. Le second échangeur de chaleur du second dispositif de transfert thermique auxiliaire est en contact thermique avec la face interne du premier radiateur 16.

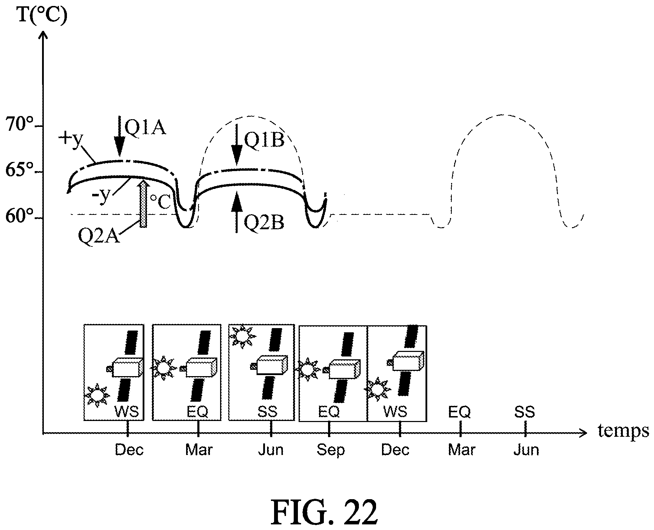

En référence aux figures 20 et 22, l'ensemble premier radiateur auxiliaire 32 et premier dispositif de transfert thermique auxiliaire 76 du second mode de réalisation de l'invention, assure au cours du solstice d'hiver la même fonction que l'ensemble premier radiateur auxiliaire 32 et premier dispositif de transfert thermique auxiliaire 34 du premier mode de réalisation de l'invention à savoir refroidir le second radiateur 18. Cet ensemble assure de plus, au cours du solstice d'hiver, une fonction supplémentaire de réchauffement du premier radiateur 16 par transfert d'une quantité d'énergie Q2A du second radiateur auxiliaire 36 vers la face principale interne 15 du premier radiateur.

Comme visible sur la figure 22, cette fonction de réchauffement permet de diminuer encore plus les écarts de température entre les première 7 et seconde 8 faces au cours du solstice d'hiver.

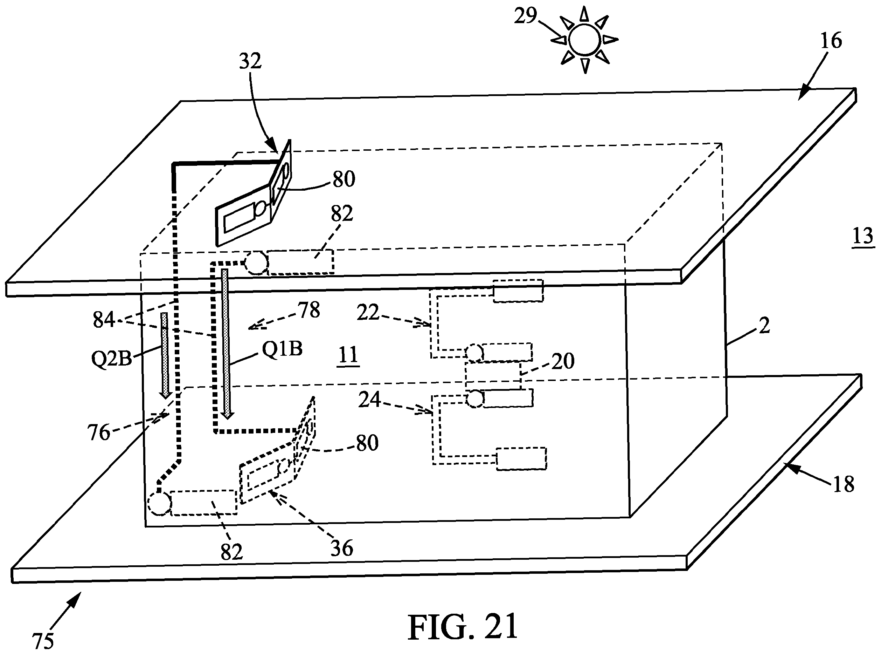

De la même façon, en référence aux figures 21 et 22, l'ensemble second radiateur auxiliaire 36 et second dispositif de transfert thermique auxiliaire 78 du second mode de réalisation de l'invention, assure la même fonction que l'ensemble second radiateur auxiliaire 36 et second dispositif de transfert thermique auxiliaire 78 du premier mode de réalisation de l'invention à savoir refroidir le premier radiateur 16. Cet ensemble assure de plus une fonction de réchauffement du second radiateur 18 par transfert d'une quantité d'énergie Q2B du premier radiateur auxiliaire 32 vers la face principale interne 21 du second radiateur.

Comme visible sur la figure 22, cette fonction de réchauffement permet de diminuer les écarts de températures entre les première 7 et seconde 8 faces au cours du solstice d'été.

Les différents modes de réalisation du premier et du deuxième radiateur auxiliaire peuvent être utilisés dans cette variante de l'engin spatial.

L'invention est applicable à différents types de missions satellite, en télécom, en observation de la Terre ou en science. L'invention présente l'avantage de pouvoir fonctionner pour tous types d'orbites (GEO, LEO, MEO et HEO), et pour différentes tailles de satellites (des nanosatellites jusqu'à des très grands satellites tels qu'illustrés dans l'invention).

Sans perte de généralité, les éléments décrits dans l'invention peuvent présenter d'autres dimensions et offrir les mêmes fonctionnalités.

## Revendications

1. Engin spatial (1, 75) comprenant :
- un boitier (2) délimitant un espace intérieur (11) et un espace extérieur (13), le boitier (2) ayant une face Nord (7), une face Sud (8) opposée à la face Nord (7), une face Est (9) et une face Ouest (10) opposée à la face Est (9), une face Terre (5) et une face anti-Terre (6) opposée à la face Terre (5),
- un premier radiateur (16) porté par une face parmi la face Nord (7) et la face Sud (8), et
- un second radiateur (18) porté par l'autre face parmi la face Nord (7) et la face Sud (8),
le premier radiateur (16) et le second radiateur (18) comportant chacun une face principale interne (15, 21), une face principale externe (17, 23) opposée à la face principale interne (15, 21), des faces latérales longitudinales (19, 25) et des faces latérales transversales (191, 251),
**caractérisé en ce que** l'engin spatial (1) comporte en outre un premier radiateur auxiliaire (3, 118, 120, 124) et un premier dispositif de transfert thermique auxiliaire (34, 76) reliant thermiquement ledit premier radiateur auxiliaire (32, 118, 120, 124) à la face principale interne (21) du second radiateur (18), le premier radiateur auxiliaire (32, 118, 120, 124) étant agencé dans une première portion (46) de l'espace extérieur (13), ladite première portion (46) étant délimitée par la face principale externe (17) du premier radiateur et par des premiers plans (48, 50, 52, 54) contenant les faces latérales (19, 191) du premier radiateur,
et **en ce que** ledit premier dispositif de transfert thermique auxiliaire (34, 76) comporte un dispositif conducteur de chaleur (42, 80), ledit premier radiateur auxiliaire (32, 118, 120, 124) étant constitué uniquement d'un ou de deux panneaux rayonnants (100, 102) supportant ledit dispositif conducteur de chaleur (42, 80), dit(s) panneau(x) rayonnant(s) porteur(s).

2. Engin spatial (1, 75) selon la revendication 1, dans lequel ledit ou lesdits panneau(x) rayonnant(s) porteur (100) du premier radiateur auxiliaire (32, 118, 120, 124) présentent une largeur (L) comprise entre 10 centimètres et 60 centimètres et de préférence comprise entre 40 centimètres et 50 centimètres ledit ou lesdits panneau(x) rayonnant(s) porteur (100) étant disposés à une distance (D) comprise entre 1 mètres et 5,2 mètres et de préférence entre 4,3 mètres et 5 mètres par rapport à un plan contenant la face anti-Terre (6).

3. Engin spatial (1, 75) selon l'une quelconque des revendications 1 et 2, dans lequel ledit ou lesdits panneau(x) rayonnant(s) porteur(s) (100, 102) s'étende(nt) perpendiculairement au premier radiateur (16), ledit ou lesdits panneau(x) rayonnant(s) porteur(s) (100, 102) présentant un angle compris entre 10° et 35° par rapport à au moins une face parmi la face Terre (6) et la face anti-Terre (5).

4. Engin spatial (1, 75) selon l'une quelconque des revendications 1 à 3, dans lequel ledit ou lesdits panneau(x) porteur(s) présente(nt) la forme d'un trapèze rectangle ayant un angle obtus (p); ledit angle obtus (p) étant disposé adjacent à une face latérale longitudinale (19) du premier radiateur.

5. Engin spatial (1, 75) selon l'une quelconque des revendications 1 à 4, qui comporte un panneau solaire (14) fixé sur la face Nord (7) et dans lequel le premier radiateur auxiliaire (32) est constitué de deux panneaux rayonnants porteurs (100, 102) agencés l'un par rapport à l'autre de manière à former un V pointant en direction dudit panneau solaire (14).

6. Engin spatial (1, 75) selon l'une quelconque des revendications 1 et 2, dans lequel ledit premier radiateur auxiliaire (118, 120, 124) est constitué d'un unique panneau rayonnant porteur (100) s'étendant parallèlement à au moins une face parmi la face Terre (6) et la face anti-Terre (5).

7. Engin spatial (1, 75) selon la revendication 6, dans lequel ledit premier radiateur auxiliaire (120, 124) comprend au moins un panneau rayonnant (122) dépourvu d'un dispositif conducteur de chaleur, dit(s) panneau(x) rayonnant(s) non porteur(s), le ou lesdits panneau(x) rayonnant(s) non porteur(s) (122) s'étendant perpendiculairement à au moins une face parmi la face Nord (7) et la face Sud (8).

8. Engin spatial (1, 75) selon la revendication 7, dans lequel le ou lesdits panneau(x) rayonnant(s) non porteur(s) (122) s'étende(nt) perpendiculairement à au moins une face parmi la face anti-Terre (5) et le face Terre (6).

9. Engin spatial (1, 75) selon l'une quelconque des revendications 7 et 8, dans lequel le panneau rayonnant porteur (100) comporte une première face principale (110) et une deuxième face principale (112) dirigée vers la Terre et opposée à la première face principale (110), et dans lequel le ou les panneaux rayonnant(s) non porteurs (122) sont fixé(s) à la première face principale (110).

10. Engin spatial (1, 75) selon l'une quelconque des revendications 7 à 9, dans lequel ledit premier radiateur auxiliaire (124) comprend plusieurs panneaux rayonnant(s) non porteur(s) (122) présentant une largeur différente, et dans lequel ledit panneau rayonnant non porteur (122) de plus grande largeur est agencé dans une partie médiane du panneau rayonnant porteur (100).

11. Engin spatial (1, 75) selon l'une quelconque des revendications 1 et 2, dans lequel ledit premier radiateur auxiliaire (118) est constitué d'un unique panneau rayonnant s'étendant dans un plan perpendiculaire au premier radiateur (16) et à une face parmi la face Terre (6) et la face anti-Terre (5).

12. Engin spatial (1, 75) selon l'une quelconque des revendications 1 et 2, dans lequel ledit premier radiateur auxiliaire (118) est constitué d'un unique panneau rayonnant s'étendant dans un plan perpendiculaire à une face parmi la face Terre (6) et la face anti-Terre (5), ledit plan présentant un angle d'environ 23,5 degrés par rapport au premier radiateur(16).

13. Engin spatial (1, 75) l'une quelconque des revendications 1 et 2, dans lequel le premier radiateur auxiliaire est constitué de deux panneaux rayonnants porteurs et de deux panneaux rayonnants dépourvus de dispositif conducteur de chaleur, lesdits panneaux rayonnants porteurs étant fixés l'un à l'autre de manière à ce que le plan médian d'un panneau rayonnant porteur forme un angle aigu avec le plan médian de l'autre panneau rayonnant porteur, chaque panneau rayonnant porteur étant en outre fixé à un panneau rayonnant dépourvu de dispositif conducteur de chaleur de manière à ce que le plan médian d'un panneau rayonnant porteur forme un angle aigu avec le plan médian du panneau rayonnant dépourvu de dispositif conducteur de chaleur.

14. Engin spatial (1, 75) selon l'une quelconque des revendications 1 à 13, dans lequel le ou lesdits panneau(x) rayonnant(s) porteur(s) sont réalisés dans une structure en nid d'abeille.

15. Engin spatial (1, 75) selon l'une quelconque des revendications 1 à 14, dans lequel au moins un panneau rayonnant porteur est recouvert d'un revêtement de type réflecteur optique solaire (OSR).

## Patentansprüche

1. Raumfahrzeug (1, 75), umfassend:
- ein Gehäuse (2), welches einen Innenraum (11) und einen Außenraum (13) begrenzt, wobei das Gehäuse (2) eine Nordfläche (7), eine Südfläche (8) gegenüber der Nordfläche (7), eine Ostfläche (9) und eine Westfläche (10) gegenüber der Ostfläche (9), eine Erdfläche (5) und eine erdabgewandte Fläche (6) gegenüber der Erdfläche (5) aufweist,
- einen ersten Radiator (16), welcher durch eine aus der Nordfläche (7) und der Südfläche (8) getragen ist, und
- einen zweiten Radiator (18), welcher durch die andere aus der Nordfläche (7) und der Südfläche (8) getragen ist,
wobei der erste Radiator (16) und der zweite Radiator (18) jeweils eine innere Hauptfläche (15, 21), eine äußere Hauptfläche (17, 23) gegenüber der inneren Hauptfläche (15, 21), longitudinale laterale Flächen (19, 25) und transversale laterale Flächen (191, 251) umfassen,
**dadurch gekennzeichnet, dass** das Raumfahrzeug (1) ferner einen ersten Hilfsradiator (3, 118, 120, 124) und eine erste Hilfsvorrichtung für thermischen Transport (34, 76) umfasst, welche den ersten Hilfsradiator (32, 118, 120, 124) mit der inneren Hauptfläche (21) des zweiten Radiators (18) thermisch verbindet, wobei der erste Hilfsradiator (32, 118, 120, 124) an einem ersten Abschnitt (46) des Außenraums (13) angebracht ist, wobei der erste Abschnitt (46) durch die äußere Hauptfläche (17) des ersten Radiators und durch erste Ebenen (48, 50, 52, 54) begrenzt ist, welche laterale Flächen (19, 191) des ersten Radiators enthalten,
und dadurch, dass die erste Hilfsvorrichtung für thermischen Transport (34, 76) eine Wärmeleitungsvorrichtung (42, 80) umfasst, wobei der erste Hilfsradiator (32, 118, 120, 124) lediglich durch ein oder zwei Strahlungspaneele (100, 102) gebildet ist, welche/s die Wärmeleitungsvorrichtung (42, 80) trägt/tragen, genannt Trage-Strahlungspaneel/e.

2. Raumfahrzeug (1, 75) nach Anspruch 1, wobei das oder die Trage-Strahlungspaneel/e (100) des ersten Hilfsradiators (32, 118, 120, 124) eine Breite (L) aufweisen, welche zwischen 10 Zentimeter und 60 Zentimeter beträgt und vorzugsweise zwischen 40 Zentimeter und 50 Zentimeter beträgt, wobei das oder die Trage-Strahlungspaneel/e (100) in einer Distanz (D) angeordnet ist/sind, welche zwischen 1 Meter und 5,2 Meter und vorzugsweise zwischen 4,3 Meter und 5 Meter beträgt, bezüglich einer Ebene, welche die erdabgewandte Fläche (6) enthält.

3. Raumfahrzeug (1, 75) nach einem der Ansprüche 1 und 2, wobei sich das oder die Trage-Strahlungspaneel/e (100, 102) senkrecht zu dem ersten Radiator erstreckt/erstecken, wobei das oder die Trage-Strahlungspaneel/e (100, 102) einen Winkel aufweisen, welcher zwischen 10° und 35° bezüglich wenigstens einer Fläche aus der Erdfläche (6) und der erdabgewandten Fläche (5) beträgt.

4. Raumfahrzeug (1, 75) nach einem der Ansprüche 1 bis 3, wobei das oder die Trage-Strahlungspaneel/e die Form eines rechtwinkligen Trapezes aufweist/aufweisen, welches einen stumpfen Winkel (p) aufweist, wobei der stumpfe Winkel (p) benachbart zu einer longitudinalen lateralen Fläche (19) des ersten Radiators angeordnet ist.

5. Raumfahrzeug (1, 75) nach einem der Ansprüche 1 bis 4, umfassend ein Solarpaneel (14), welches an der Nordfläche (7) befestigt ist, und wobei der erste Hilfsradiator (32) durch zwei Trage-Strahlungspaneele (100, 102) gebildet ist, welche in Bezug zueinander in einer Weise angebracht sind, dass sie ein V bilden, welches in Richtung des Solarpaneels (14) zeigt.

6. Raumfahrzeug (1, 75) nach einem der Ansprüche 1 und 2, wobei der erste Hilfsradiator (118, 120, 124) durch ein einzelnes Trage-Strahlungspaneel (100) gebildet ist, welches sich parallel zu wenigstens einer Fläche aus der Erdfläche (6) und der erdabgewandten Fläche (5) erstreckt.

7. Raumfahrzeug (1, 75) nach Anspruch 6, wobei der erste Hilfsradiator (120, 124) wenigstens ein Strahlungspaneel (122) umfasst, welches frei von einer Wärmeleitungsvorrichtung ist, genannt nicht-Trage-Strahlungspaneel/e, wobei sich das oder die nicht-Trage-Strahlungspaneel/e (122) senkrecht zu wenigstens einer Fläche aus der Nordfläche (7) und der Südfläche (8) erstreckt/erstrecken.

8. Raumfahrzeug (1, 75) nach Anspruch 7, wobei sich das oder die nicht-Trage-Strahlungspaneel/e (122) senkrecht zu wenigstens einer Fläche aus der erdabgewandten Fläche (5) und der Erdfläche (6) erstreckt/erstrecken.

9. Raumfahrzeug (1, 75) nach einem der Ansprüche 7 und 8, wobei das Trage-Strahlungspaneel (100) eine erste Hauptfläche (110) und eine zweite Hauptfläche (112) umfasst, welche in Richtung der Erde gerichtet ist und der ersten Hauptfläche (110) gegenüberliegt, und wobei das oder die nicht-Trage-Strahlungspaneel/e (122) an der ersten Hauptfläche (110) befestigt ist/sind.

10. Raumfahrzeug (1, 75) nach einem der Ansprüche 7 bis 9, wobei der erste Hilfsradiator (124) mehrere nicht-Trage-Strahlungspaneel/e (122) umfasst, welche eine unterschiedliche Breite aufweisen, und wobei das nicht-Trage-Strahlungspaneel (122) mit der größten Breite an einem mittleren Teil des Trage-Strahlungspaneels (100) angebracht ist.

11. Raumfahrzeug (1, 75) nach einem der Ansprüche 1 und 2, wobei der erste Hilfsradiator (118) aus einem einzelnen Strahlungspaneel gebildet ist, welches sich in einer Ebene senkrecht zu dem ersten Radiator (16) und einer Fläche aus der Erdfläche (6) und der erdabgewandten Fläche (5) erstreckt.

12. Raumfahrzeug (1, 75) nach einem der Ansprüche 1 und 2, wobei der erste Hilfsradiator (118) aus einem einzelnen Strahlungspaneel gebildet ist, welches sich in einer Ebene senkrecht zu einer Fläche aus der Erdfläche (6) und der erdabgewandten Fläche (5) erstreckt, wobei die Ebene einen Winkel von etwa 23,5 Grad bezüglich des ersten Radiators (16) aufweist.

13. Raumfahrzeug (1, 75) nach einem der Ansprüche 1 und 2, wobei der erste Hilfsradiator aus zwei Trage-Strahlungspaneelen und zwei Strahlungspaneelen gebildet ist, welche frei von einer Wärmeleitungsvorrichtung sind, wobei die Trage-Strahlungspaneele das eine an dem anderen in einer Weise befestigt sind, dass die Mittelebene eines Trage-Strahlungspaneels einen spitzen Winkel mit der Mittelebene des anderen Trage-Strahlungspaneels bildet, wobei jedes Trage-Strahlungspaneel ferner in einer Weise an einem Strahlungspaneel befestigt ist, welches frei von einer Wärmeleitungsvorrichtung ist, dass die Mittelebene eines Trage-Strahlungspaneels einen spitzen Winkel mit der Mittelebene des Strahlungspaneels bildet, welches frei von einer Wärmeleitungsvorrichtung ist.

14. Raumfahrzeug (1, 75) nach einem der Ansprüche 1 bis 13, wobei das oder die Trage-Strahlungspaneel/e in einer Struktur mit Wabenmuster gebildet sind.

15. Raumfahrzeug (1, 75) nach einem der Ansprüche 1 bis 14, wobei wenigstens ein Trage-Strahlungspaneel mit einer Beschichtung vom solaroptischen Reflektortyp (OSR) bedeckt ist.

## Claims

1. Spacecraft (1, 75) comprising:
- a housing (2) defining an interior space (11) and an exterior space (13), the housing (2) having a north face (7), a south face (8) opposite to the north face (7), an east face (9), and a west face (10) opposite to the east face (9), an Earth face (5), and a zenith face (6) opposite to the Earth face (5),
- a first radiator (16) carried by a face among the north face (7) and south face (8), and
- a second radiator (18) carried by the other face among the north face (7) and south face (8),
the first radiator (16) and the second radiator (18) each having an inner main face (15, 21), an outer main face (17, 23) opposite to the inner main face (15, 21), longitudinal side faces (19, 25), and transverse side faces (191, 251),
**characterized in that** the spacecraft (1) further comprises a first auxiliary radiator (3, 118, 120, 124) and a first auxiliary heat transfer device (34, 76) thermally connecting said first auxiliary radiator (32, 118, 120, 124) to the inner main face (21) of the second radiator (18), the first auxiliary radiator (32, 118, 120, 124) being arranged in a first portion (46) of the exterior space (13), said first portion (46) being defined by the outer main face (17) of the first radiator and by first planes (48, 50, 52, 54) containing the side faces (19, 191) of the first radiator,
and **in that** said first auxiliary heat transfer device (34, 76) comprises a heat conducting device (42, 80), said first auxiliary radiator (32, 118, 120, 124) being composed solely of one or two radiating panels (100, 102) supporting said heat conducting device (42, 80), called carrier radiating panel(s).

2. Spacecraft (1, 75) according to claim 1, wherein said carrier radiating panel or panels (100) of the first auxiliary radiator (32, 118, 120, 124) have a width (L) comprised between 10 centimeters and 60 centimeters and preferably between 40 centimeters and 50 centimeters, said carrier radiating panel or panels (100) being arranged at a distance (D) comprised between 1 meter and 5.2 meters and preferably between 4.3 meters and 5 meters with respect to a plane containing the zenith face (6).

3. Spacecraft (1, 75) according to any one of claims 1 and 2, wherein said carrier radiating panel or panels (100, 102) extend(s) perpendicularly to the first radiator (16), said carrier radiating panel or panels (100, 102) being at an angle comprised between 10° and 35° with respect to at least one face among the Earth face (6) and the zenith face (5).

4. Spacecraft (1, 75) according to any one of claims 1 to 3, wherein said carrier panel or panels has (have) the shape of a rectangular trapezoid having an obtuse angle (p); said obtuse angle (p) being adjacent to a longitudinal side face (19) of the first radiator.

5. Spacecraft (1, 75) according to any one of claims 1 to 4 comprising a solar panel (14) fixed on the north face (7), and wherein the first auxiliary radiator (32) is composed of two carrier radiating panels (100, 102) arranged relative to each other so as to form a V pointing towards said solar panel (14).

6. Spacecraft (1, 75) according to any one of claims 1 and 2, wherein said first auxiliary radiator (118, 120, 124) is composed of a single carrier radiating panel (100) extending parallel to at least one face among the Earth face (6) and the zenith face (5).

7. Spacecraft (1, 75) according to claim 6, wherein said first auxiliary radiator (120, 124) comprises at least one radiating panel (122) without any heat conducting device, called non-carrier radiating panel or panels, said non-carrier radiating panel or panels (122) extending perpendicularly to at least one face among the north face (7) and the south face (8).

8. Spacecraft (1, 75) according to claim 7, wherein said non-carrier radiating panel or panels (122) extend(s) perpendicularly to at least one face among the zenith face (5) and the Earth face (6).

9. Spacecraft (1, 75) according to any one of claims 7 and 8, wherein the carrier radiating panel (100) comprises a first main face (110), and a second main face (112) directed towards the Earth and opposite to the first main face (110), and wherein the non-carrier radiating panel or panels (122) is (are) fixed to the first main face (110).

10. Spacecraft (1, 75) according to any one of claims 7 to 9, wherein said first auxiliary radiator (124) comprises a plurality of non-carrier radiating panels (122) having different widths, and wherein said non-carrier radiating panel (122) of greatest width is arranged in a central portion of the carrier radiating panel (100).

11. Spacecraft (1, 75) according to any one of claims 1 and 2, wherein said first auxiliary radiator (118) is composed of a single radiating panel extending in a plane perpendicular to the first radiator (16) and to a face among the Earth face (6) and the zenith face (5).

12. Spacecraft (1, 75) according to any one of claims 1 and 2, wherein said first auxiliary radiator (118) is composed of a single radiating panel extending in a plane perpendicular to a face among the Earth face (6) and the zenith face (5), said plane being at an angle of about 23.5 degrees relative to the first radiator (16).

13. Spacecraft (1, 75) according to any one of claims 1 and 2, wherein the first auxiliary radiator is composed of two carrier radiating panels and two radiating panels without any heat conducting device, said carrier radiating panels being fixed to each other so that the midplane of one carrier radiating panel forms an acute angle with the midplane of the other carrier radiating panel, each carrier radiating panel further being fixed to a radiating panel without any heat conducting device so that the midplane of a carrier radiating panel forms an acute angle with the midplane of the radiating panel without any heat conducting device.

14. Spacecraft (1, 75) according to any one of claims 1 to 13, wherein said carrier radiating panel or panels are implemented in a honeycomb structure.

15. Spacecraft (1, 75) according to any one of claims 1 to 14, wherein at least one carrier radiating panel is covered with an optical solar reflector (OSR) type of coating.
